# EUROPEAN PATENT SPECIFICATION

(11) **EP 0 790 741 B1**
(45) Date of publication and mention of the grant of the patent: **04.04.2007**
(21) Application number: 96307760.7
(22) Date of filing: 25.10.1996
(51) Int. Cl.: H04N 7/26, H04N 7/66, H03M 13/00, H04N 7/30

(54) **Video compression method using sub-band decomposition**
Verfahren zur Videokompression mittels Teilbandzerlegung
Procédé pour la compression vidéo avec décomposition en bandes partielles

(30) Priority: 27.10.1995 US 5971; 27.10.1995 US 5970; 27.10.1995 US 8029
(43) Date of publication of application: 20.08.1997
(73) Proprietor: TEXAS INSTRUMENTS INCORPORATED, Dallas, Texas 75243 (US)
(72) Inventor: Bannon, Thomas J., Dallas, TX 75209 (US); Talluri, Rajendra, Richardsons, TX 75080 (US)
(74) Representative: Holt, Michael

(56) References cited:
- GB-A- 2 079 993
- US-A- 4 637 021
- CHENG P -Y ET AL: "MULTISCALE VIDEO COMPRESSION USING WAVELET TRANSFORM AND MOTION COMPENSATION" PROCEEDINGS OF THE INTERNATIONAL CONFERENCE ON IMAGE PROCESSING. (ICIP),US,LOS ALAMITOS, IEEE COMP. SOC. PRESS,1995, pages 606-609, XP000624311 ISBN: 0-7803-3122-2
- CHANG S -F ET AL: "TRANSFORM CODING OF ARBITRARILY-SHAPED IMAGE SEGMENTS" PROCEEDINGS OF FIRST ACM INTERNATIONAL CONFERENCE ON MULTIMEDIA, 2-6 AUGUST 1993, ANAHEIM, CA, US,US,NEW YORK, NY, 2 August 1993 (1993-08-02), pages 83-90, XP000607524
- SHAPIRO J M: "AN EMBEDDED HIERARCHICAL IMAGE CODER USING ZEROTREES OF WAVELET COEFFICIENTS" DATA COMPRESSION CONFERENCE,US,IEEE COMPUTER SOCIETY PRESS, LOS ALAMITOS, CA, 30 March 1993 (1993-03-30), pages 214-223, XP000608065

## Description

### BACKGROUND OF THE INVENTION

The invention relates to electronic video methods and devices, and, more particularly, to digital communication and storage systems with compressed video.

Video communication (television, teleconferencing, and so forth) typically transmits a stream of video frames (images) along with audio over a transmission channel for real time viewing and listening by a receiver. However, transmission channels frequently add corrupting noise and have limited bandwidth (e.g., television channels limited to 6 MHz). Consequently, digital video transmission with compression enjoys widespread use. In particular, various standards for compression of digital video have emerged and include H.261, MPEG-1, and MPEG-2, with more to follow, including in development H.263 and MPEG-4. There are similar audio compression methods such as CELP and MELP.

Tekalp, Digital Video Processing (Prentice Hall 1995), Clarke, Digital Compression of Still Images and Video (Academic Press 1995), and Schafer et al, Digital Video Coding Standards and Their Role in Video Communications, 83 Proc. IEEE 907 (1995), include summaries of various compression methods, including descriptions of the H.261, MPEG-1, and MPEG-2 standards plus the H.263 recommendations and indications of the desired functionalities of MPEG-4.

H.261 compression uses interframe prediction to reduce temporal redundancy and discrete cosine transform (DCT) on a block level together with high spatial frequency cutoff to reduce spatial redundancy. H.261 is recommended for use with transmission rates in multiples of 64 Kbps (kilobits per second) to 2 Mbps (megabits per second).

The H.263 recommendation is analogous to H.261 but for bitrates of about 22 Kbps (twisted pair telephone wire compatible) and with motion estimation at half-pixel accuracy (which eliminates the need for loop filtering available in H.261) and overlapped motion compensation to obtain a denser motion field (set of motion vectors) at the expense of more computation and adaptive switching between motion compensation with 16 by 16 macroblock and 8 by 8 blocks.

MPEG-1 and MPEG-2 also use temporal prediction followed by two dimensional DCT transformation on a block level as H261, but they make further use of various combinations of motion-compensated prediction, interpolation, and intraframe coding. MPEG-1 aims at video CDs and works well at rates of about 1-1.5 Mbps for frames of about 360 pixels by 240 lines and 24-30 frames per second.
MPEG-1 defines I, P, and B frames with I frames intraframe, P frames coded using motion-compensation prediction from previous I or P frames, and B frames using motion-compensated bi-directional prediction/interpolation from adjacent I and P frames.

MPEG-2 aims at digital television (720 pixels by 480 lines) and uses bit-rates up to about 10 Mbps with MPEG-1 type motion compensation with I, P, and B frames plus adds scalability (a lower bitrate may be extracted to transmit a lower resolution image).

However, the foregoing MPEG compression methods result in a number of unacceptable artifacts such as blockiness and unnatural object motion when operated at very-low-bit-rates. Because these techniques use only the statistical dependencies in the signal at a block level and do not consider the semantic content of the video stream, artifacts are introduced at the block boundaries under very-low-bit-rates (high quantization factors). Usually these block boundaries do not correspond to physical boundaries of the moving objects and hence visually annoying artifacts result.

Unnatural motion arises when the limited bandwidth forces the frame rate to fall below that required for smooth motion.

MPEG-4 is to apply to transmission bit-rates of 10 Kbps to 1 Mbps and is to use a content-based coding approach with functionalities such as scalability, content-based manipulations, robustness in error prone environments, multimedia data access tools, improved coding efficiency, ability to encode both graphics and video, and improved random access. A video coding scheme is considered content scalable if the number and/or quality of simultaneous objects coded can be varied. Object scalability refers to controlling the number of simultaneous objects coded and quality scalability refers to controlling the spatial and/or temporal resolutions of the coded objects. Scalability is an important feature for video coding methods operating across transmission channels of limited bandwidth and also channels where the bandwidth is dynamic. For example, a content-scalable video coder has the ability to optimize the performance in the face of limited bandwidth by encoding and transmitting only the important objects in the scene at a high quality. It can then choose to either drop the remaining objects or code them at a much lower quality. When the bandwidth of the channel increases, the coder can then transmit additional bits to improve the quality of the poorly coded objects or restore the missing objects.

Musmann et al, Object-Oriented Analysis-Synthesis Coding of Moving Images, 1 Sig. Proc.: Image Comm. 117 (1989), illustrates hierarchical moving object detection using source models. Tekalp, chapters 23-24 also discusses object-based coding.

Medioni et al, Corner Detection and Curvature Representation Using Cubic B-Splines, 39 Comp.Vis.Grph.Image Processing, 267 (1987), shows encoding of curves with B-Splines. Similarly, Foley et al, Computer Graphics (Addison-Wesley 2d Ed.), pages 491-495 and 504-507, discusses cubic B-splines and Catmull-Rom splines (which are constrained to pass through the control points).

P.-Y. Cheng et al., Multiscale Video Compression Using Wavelet Transform and Motion Compensation, Proc. of Intl. Conf. Image Processing 606-609 (1995), combine motion compensation for a sequence of video images with wavelet decomposition of images by finding motion vectors for the low-low frequency band at each scale of a wavelet decomposition of an image and predicting using the corresponding low-low frequency band of the prior image.

In order to achieve efficient transmission of video, a system must utilize compression schemes that are bandwidth efficient. The compressed video data is then transmitted over communication channels which are prone to errors. For video coding schemes which exploit temporal correlation in the video data, channel errors result in the decoder losing synchronization with the encoder. Unless suitably dealt with, this can result in noticeable degradation of the picture quality. To maintain satisfactory video quality or quality of service, it is desirable to use schemes to protect the data from these channel errors.
However, error protection schemes come with the price of an increased bit-rate. Moreover, it is not possible to correct all possible errors using a given error-control code. Hence, it becomes necessary to resort to some other techniques in addition to error control to effectively remove annoying and visually disturbing artifacts introduced by these channel induced errors.

In fact, a typical channel, such as a wireless channel, over which compressed video is transmitted is characterized by high random bit error rates (BER) and multiple burst errors. The random bit errors occur with a probability of around 0.001 and the burst errors have a duration that usually lasts up to 24 milliseconds (msec).

Error correcting codes such as the Reed-Solomon (RS) codes correct random errors up to a designed number per block of code symbols.
Problems arise when codes are used over channels prone to burst errors because the errors tend to be clustered in a small number of received symbols. The commercial digital music compact disc (CD) uses interleaved codewords so that channel bursts may be spread out over multiple codewords upon decoding. In particular, the CD error control encoder uses two shortened RS codes with 8-bit symbols from the code alphabet GF(256). Thus 16-bit sound samples each take two information symbols. First, the samples are encoded twelve at a time (thus 24 symbols) by a (28,24) RS code, then the 28-symbol codewords pass a 28-branch interleaver with delay increments of 28-symbols between branches. Thus 28 successive 28-symbol codewords are interleaved symbol by symbol. After the interleaving, the 28-symbol blocks are encoded with a (32,28) RS coder to output 32-symbol codewords for transmission. The decoder is a mirror image: a (32,28) RS decoder, 28-branch deinterleaver with delay increment 4 symbols, and a (28,24) RS decoder. The (32,28) RS decoder can correct 1 error in an input 32-symbol codeword and can output 28 erased symbols for two or more errors in the 32-symbol input codeword. The deinterleaver then spreads these erased symbols over 28 codewords. The (28,24) RS decoder is set to detect up to and including 4 symbol errors which are then replaced with erased symbols in the 24-symbol output words; for 5 or more errors, all 24 symbols are erased. This corresponds to erased music samples. The decoder may interpolate the erased music samples with adjacent samples. Generally, see Wickes, Error Control Systems for Digital Communication and Storage (Prentice Hall 1995).

There are several hardware and software implementations of the H.261, MPEG-1, and MPEG-2 compression and decompression. The hardware can be single or multichip integrated circuit implementations (see Tekalp pages 455-456) or general purpose processors such as the Ultrasparc or TMS320C80 running appropriate software. Public domain software is available from the Portable Video Research Group at Stanford University.

The present invention provides video compression apparatus and method as defined in the claims.

### BRIEF DESCRIPTION OF THE DRAWINGS

The present invention will now be further described, by way of example with reference to the accompanying drawings in which
Figure 1 shows a telephony system;
Figure 2 illustrates a surveillance system;
Figure 3 is a flow diagram for video compression;
Figures 4a-d shows motion segmentation;
Figures 5a-g illustrate boundary contour encoding;
Figure 6 shows motion compensation;
Figure 7 illustrates motion failure regions;
Figure 8 shows the control grid on the motion failure regions;
Figure 9a-b show a single wavelet filtering stage;
Figures 10a-c illustrates wavelet decomposition;
Figure 11 illustrates a zerotree for wavelet coefficient quantization; and
Figure 12 is a wavelet compressor block diagram.

### DESCRIPTION OF THE PREFERRED EMBODIMENTS

### Overview of Compression and Decompression

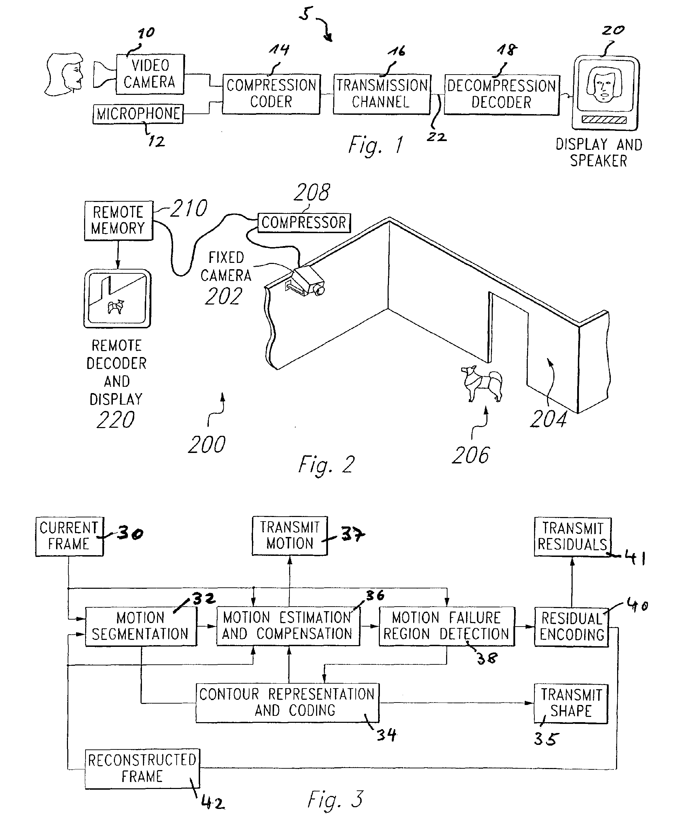

Figure 1 illustrates a block diagram of a video-telephony (teleconferencing) system which transmits both speech and an image of the speaker using preferred embodiment compression, encoding, decoding, and decompression including error correction with the encoding and decoding. The teleconferencing system 5 comprises a video camera 10 and microphone 12 coupled to a compression coder 14 for compressing received video and audio signals from the camera 10 and microphone 12. The compressed video and audio signals are transmitted in a predetermined transmission channel 16 over a suitable transmission medium 22 to a decompression decoder 18. The decompression decoder 18 decompresses the compressed video and audio signals and provides the decompressed signals to a video display and speaker 20. Of course, Figure 1 shows only transmission in one direction and to only one receiver; in practice a second camera and second receiver would be used for transmission in the opposite direction and a third or more receivers and transmitters could be connected into the system. The video and speech are separately compressed and the allocation of transmission channel bandwidth between video and speech may be dynamically adjusted depending upon the situation. The costs of telephone network bandwidth demand a low-bit-rate transmission. Indeed, very-low-bit-rate video compression finds use in multimedia applications where visual quality may be compromised.

Figure 2 shows a surveillance system, generally denoted by reference numeral 200, as comprising one or more fixed video cameras 202 focused on stationary background 204 (with occasional moving objects 206 passing in the field of view) plus video compressor 208 together with remote storage 210 plus decoder and display 220. Compressor 208 provides compression of the stream of video images of the scene (for example, 30 frames a second with each frame 176 by 144 8-bit monochrome pixels) so that the data transmission rate from compressor 208 to storage 210 may be very low, for example 22 Kbits per second, while retaining high quality images. System 200 relies on the stationary background and only encodes moving objects (which appear as regions in the frames which move relative to the background) with predictive motion to achieve the low data rate. This low data rate enables simple transmission channels from cameras to monitors and random access memory storage such as magnetic hard disk drives available for personal computers. Indeed, a single telephone line with a modem may transmit the compressed video image stream to a remote monitor. Further, storage of the video image stream for a time interval, such as a day or week as required by the particular surveillance situation, will require much less memory after such compression.

Video camera 202 may be a CCD camera with an incamera analog-to-digital converter so that the output to compressor 208 is a sequence of digital frames as generally illustrated in Figure 2; alternatively, analog cameras with additional hardware may be used to generate the digital video stream of frames. Compressor 208 may be hardwired or, more conveniently, a digital signal processor (DSP) with the compression steps stored in onboard memory, RAM or ROM or both. For example, a TMS320C50 or TMS320C80 type DSP as manufactured by Texas Instruments Inc. may suffice. Also, for a teleconferencing system as shown in Figure 1, error correction with real time reception may be included and implemented on general purpose processors.

Figure 3 shows a high level flow diagram for video compression methods which include the following steps for an input consisting of a sequence of frames, F₀, F₁, F₂, .... F_{N}, with each frame 144 rows of 176 pixels or 288 rows of 352 pixels and with a frame rate of 10 frames per second. Details of the steps appear in the following sections.

Frames of these two sizes partition into arrays of 9 rows of 11 macroblocks with each macroblock being 16 pixels by 16 pixels or 18 rows of 22 macroblocks. The frames will be encoded as I pictures or P pictures; B pictures with their backward interpolation would create overly large time delays for very low bitrate transmission. An I picture occurs only once every 5 or 10 seconds, and the majority of frames are P pictures. For the 144 rows of 176 pixels size frames, roughly an I picture will be encoded with 20 Kbits and a P picture with 2 Kbits, so the overall bitrate will be roughly 22 Kbps (only 10 frames per second or less). The frames may be monochrome or color with the color given by an intensity frame (Y signal) plus one quarter resolution (subsampled) color combination frames (U and V signals).
(1) For the current frame 30, encode the zeroth frame F₀ as an I picture like in MPEG-1,2 using a waveform coding technique based on the DCT or wavelet transform. For the DCT case, partition the frame into 8 by 8 blocks; compute the DCT of each block; cutoff the high spatial frequencies; quantize and encode the remaining frequencies, and transmit. The encoding includes run length encoding, then Huffman encoding, and then error correction encoding. For the wavelet case, compute the multi-level decomposition of the frame; quantize and encode the resulting wavelet coefficients, and transmit. Other frames when the current frame, will also be encoded as I pictures with the frequency dependent upon the transmission channel bitrate. And for F_{N} to be an I picture, encode in the same manner.
(2) For frame F_{N} to be a P picture, detect moving objects in the frame by finding the regions of change from reconstructed F_{N-1} to F_{N} using motion segmentation. Reconstructed F_{N-1} is the approximation to F_{N-1} which is actually transmitted as described below. Note that the regions of change need not be partitioned into moving objects plus uncovered background and will only approximately describe the moving objects. However, this approximation suffices and provides more efficient low coding. Of course, an alternative would be to also make this partition into moving objects plus uncovered background through mechanisms such as inverse motion vectors to determine if a region maps to outside of the change region in the previous frame and thus is uncovered background, edge detection to determine the object, or presumption of object characteristics (models) to distinguish the object from background.
(3) For each connected component of the regions of change from (2), code its boundary contour, including any interior holes in a contour representation and coding step (block 34). Thus the boundaries of moving objects are not exactly coded; rather, the boundaries of entire regions of change are coded and approximate the boundaries of the moving objects. The boundary coding may be either by splines approximating the boundary or by a binary mask indicating blocks within the region of change. The spline provides more accurate representation of the boundary, but the binary mask uses a smaller number of bits. Note that the connected components of the regions of change may be determined by a raster scanning of the binary image mask and sorting pixels in the mask into groups, which may merge, according to the sorting of adjacent pixels. The final groups of pixels are the connected components (connected regions). For example of a program, see Ballard et al, Computer Vision (Prentice Hall) at pages 149-152. For convenience in the following the connected components (connected regions) may be referred to as (moving) objects.
(4) Remove temporal redundancies in the video sequence by a motion estimation (block 36) which estimates the motion of the objects from the previous frame. In particular, match a 16 by 16 block in an object in the current frame F_{N} with the 16 by 16 block in the same location in the preceding reconstructed frame F_{N-1} plus translations of this block up to 15 pixels in all directions. The best match defines the motion vector for this block, and an approximation F'_{N} to the current frame F_{N} can be synthesized from the preceding frame F_{N-1} by using the motion vectors with their corresponding blocks of the preceding frame.
(5) After the use of motion of objects to synthesize an approximation F'_{N}, there may still be areas within the frame which contain a significant amount of residual information, such as for fast changing areas. That is, the regions of difference between F_{N} and the synthesized approximation F'_{N} have motion segmentation applied analogous to the steps (2)-(3) to define the motion failure regions which contain significant information (block 38).
(6) Encode the motion failure regions from (5) using a waveform coding technique based on the DCT or wavelet transform in residual encoding step (block 40). For the DCT case, tile the regions with 16 by 16 macroblocks, apply the DCT on 8 by 8 blocks of the macroblocks, quantize and encode (runlength and then Huffman coding). For the wavelet case, set all pixel values outside the regions to zero, apply the multi-level decomposition, quantize and encode (zerotree and then arithmetic coding) only those wavelet coefficients corresponding to the selected regions.
(7) Assemble the encoded information for I pictures (DCT or wavelet data) and P pictures (objects ordered with each object having contour, motion vectors, and motion failure data). These can be codewords from a table of Huffman codes; this is not a dynamic table but rather generated experimentally.
(8) Insert resynchronization words at the beginning of each I picture data, each P picture, each contour data, each motion vector data, and each motion failure data. These resynchronization words are unique in that they do not appear in the Huffman codeword table and thus can be unambiguously determined.
(9) Encode the resulting bitstream from (8) with Reed-Solomon codes together with interleaving. Then transmit or store.
(10) Decode a received encoded bitstream by Reed-Solomon plus deinterleaving. The resynchronization words help after decoding failure and also provide access points for random access. Further, the decoding may be with shortened Reed -Solomon decoders on either side of the deinterleaver plus feedback from the second decoder to the first decoder (a stored copy of the decoder input) for enhanced of error correction.
(11) Additional functionalities such as object scalability (selective encoding/decoding of objects in the sequence) and quality scalability (selective enhancement of the quality of the objects) which result in a scalable bitstream are also supported.

### MOVING OBJECT DETECTION AND SEGMENTATION(Block 32)

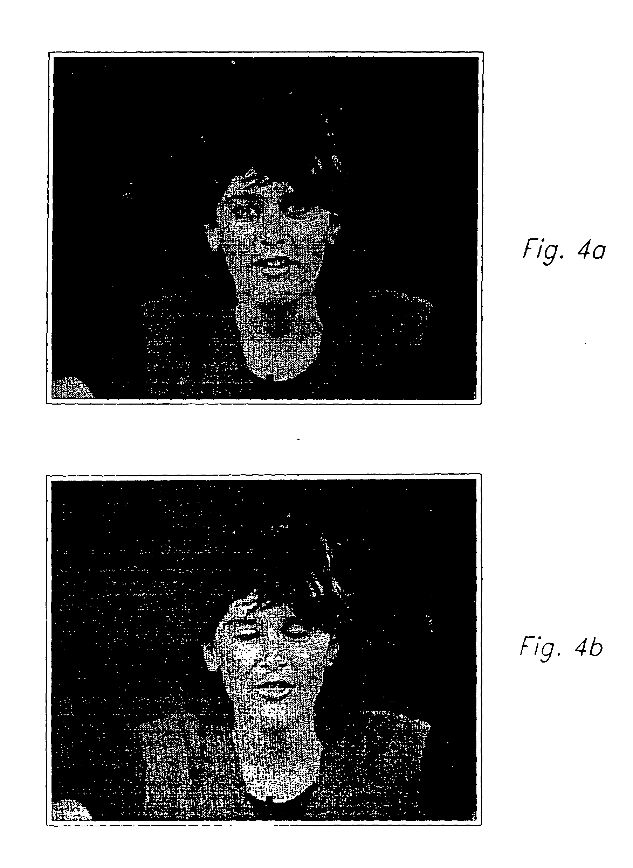

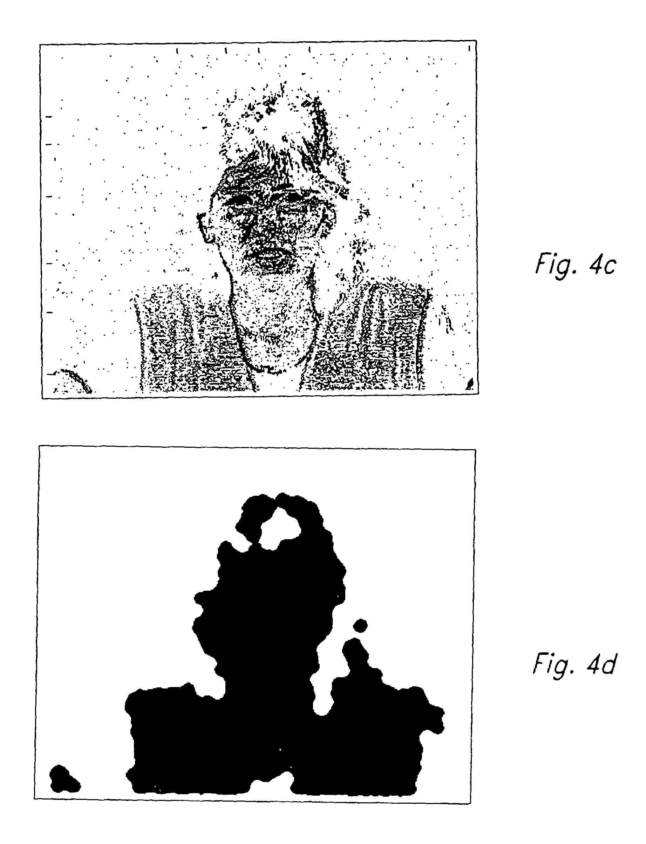

The method detects and segments moving objects by use of regions of difference between successive video frames but does not attempt to segregate such regions into moving objects plus uncovered background. This simplifies the information but appears to provide sufficient quality. In particular, for frame F_{N} at each pixel find the absolute value of the difference in the intensity (Y signal) between F_{N} and reconstructed F_{N-1}. For 8-bit intensities (256 levels labeled 0 to 255), the camera calibration variability would suggest taking the intensity range of 0 to 15 to be dark and the range 240-255 to be saturated brightness. The absolute value of the intensity difference at a pixel will lie in the range from 0 to 255, so eliminate minimal differences and form a binary image of differences by thresholding (set any pixel absolute difference of less than or equal to 5 or 10 (depending upon the scene ambient illumination) to 0 and any pixel absolute difference greater than 30 to 1). This yields a binary image which may appear speckled: Figures 4a-b illustrate two successive frames and Figure 4c the binary image of thresholded absolute difference with black pixels indicating 1s and indicating significant differences and the white background pixels indicating 0s.

Then eliminate small isolated areas in the binary image, such as would result from noise, by median filtering (replace a 1 at a pixel with a 0 if the 4 or 8 nearest neighbor pixels are all Os).

Next, apply the morphological close operation (dilate operation followed by erode operation) to fill-in between close by 1s; that is, replace the speckled areas of Figure 4c with solid areas. Use dilate and erode operations with a circular kernel of radius K pixels (K may be 11 for QCIF frames and 13 for CIF frames); in particular, the dilate operation replaces a 0 pixel with a 1 if any other pixel within K pixels of the original 0 pixel is a 1 pixel, and the erode operation replaces a 1 pixel with a 0 unless all pixels within K pixels of the original 1 pixel are all also 1 pixels. After the close operation, apply the open operation (erode operation followed by dilate operation) to remove small isolated areas of 1s. This yields a set of connected components (regions) of 1 pixels with fairly smooth boundaries as illustrated in Figure 4d. Note that a connected component may have one or more interior holes which also provide boundary contours.

Then raster scan the binary image to detect and label connected regions and their boundary contours (a pixel which is a 1 and has at least one nearest neighbor pixel which is a 0 is deemed a boundary contour pixel). A procedure such as ccomp (see Ballard reference or the Appendix) can accomplish this. Each of these regions presumptively indicates one or more moving objects plus background uncovered by the motion. Small regions can be disregarded by using a threshold such as a minimum difference between extreme boundary pixel coordinates. Such small regions may grow in succeeding frames and eventually arise in the motion failure regions of a later frame. Of course, a connected region cannot be smaller than the K-pixel-radius dilate/erode kernel, otherwise it would not have survived the open operation.

### CONTOUR REPRESENTATION(Block 34)

An option of boundary contour encoding by either spline approximation or blocks straddling the contour may be provided; this permits a choice of either high resolution or low resolution and thus provides a scalability. The boundary contour encoding with the block representation takes fewer bits but is less accurate than the spline representation. Thus a tradeoff exists which may be selected according to the application.

### (i) Block boundary contour representation.

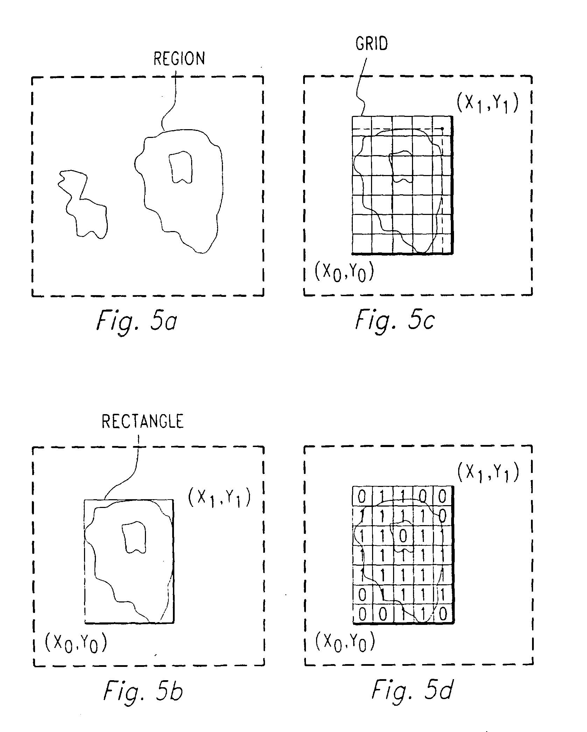

For each of the connected regions in the binary image derived from F_{N} in the preceding section, find the bounding rectangle for the region by finding the smallest and largest boundary pixel x coordinates and y coordinates: the smallest x coordinate (x₀) and the smallest y coordinate (y₀) define the lower lefthand rectangle corner (x₀,y₀) and the largest coordinates define the upper righthand corner (x₁,y₁); see Figure 5a showing a connected region and Figure 5b the region plus the bounding rectangle.

Next, tile the rectangle with 16 by 16 macroblocks starting at (x₀,y₀) and with the macroblocks extending past the upper and/or righthand edges if the rectangles sides are not multiples of 16 pixels; see Figure 5c illustrating a tiling. If the tiling would extend outside of the frame, then translate the corner (x₀,y₀) to just keep the tiling within the frame.

Form a bit map with a 1 representing the tiling macroblocks that have at least 50 of their 256 pixels (i.e., at least about 20%) on the boundary or inside the region and a 0 for macroblocks that do not. This provides the block description of the boundary contour: the starting corner (x₀,y₀) and the bit map. See Figure 5d showing the bit map.

The corner plus bit map information will be transmitted (block 35) if the region is small; that is, if at most 3 or 4 macroblocks tile the bounding rectangle. In case the region is larger, a more efficient coding proceeds as follows. First, compare the bit map with the bit maps of the previous frame, typically the previous frame has only 3 or 4 bit maps. If a bit map match is found, then compare the associated corner, (x'₀,y'₀), of the previous frame's bit map with (x₀,y₀). Then if (x'₀,y'₀) equals (x₀,y₀), a bit indicating the corner and bit map matching those of the previous frame can be transmitted instead of the full bit map and corner. Figure 5e suggests this single bit contour transmission.

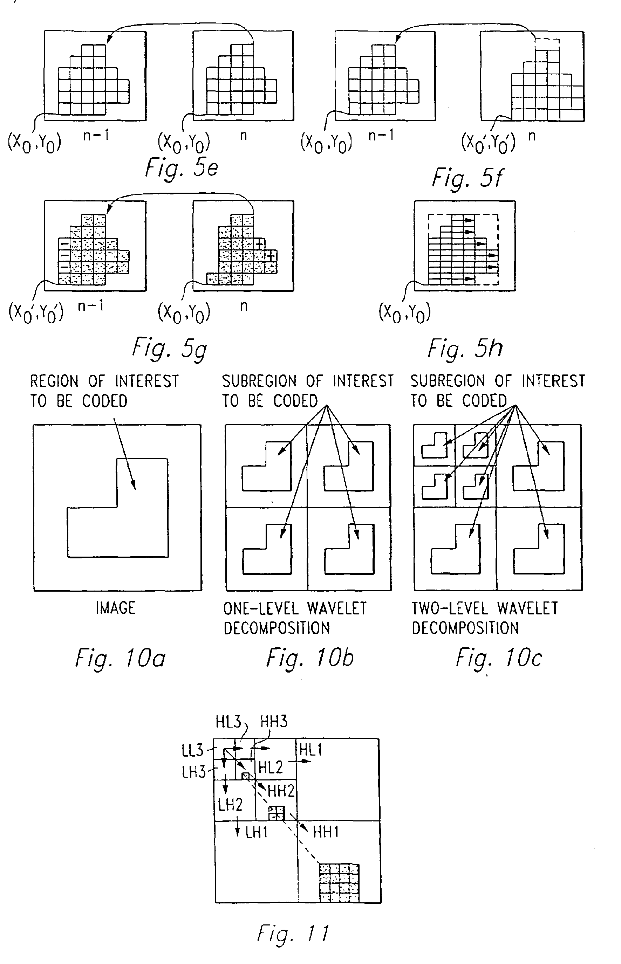

Similarly, if a bit map match is found with a bit map of the previous frame but the associated corner (x'₀,y'₀) does not equal (x₀,y₀), then transmit a translation vector [(x'₀,y'₀)-(x₀,y₀)] instead of the full bit map and corner. This translation vector typically will be fairly small because objects do not move too much frame-to-frame. See Figure 5f.

Further, if a bit map match is not found, but the bit map difference is not large, such as only 4 or 5 macroblock differences, both added and removed, then transmit the locations of the changed macroblocks plus any translation vector of the associated rectangle corners, (x'₀, y'₀)-(x₀,Y₀). See Figure 5g.

Lastly, for a large difference in macroblocks, just transmit the corner (x₀,y₀) plus run length encode the bit map along rows of macroblocks in the bounding rectangle as illustrated in Figure 5h for transmission. Note that large-enough holes within the region plus projections can give rise to multiple runs in a row.

### (ii) Spline boundary contour representation:

For each connected region derived in the preceding section find corner points of the boundary contour(s), including of any interior holes, of the region. Note that a region of size roughly 50 pixels in diameter will have very roughly 200-300 pixels in its boundary contour, so use about 20% of the pixels in a contour representation. A Catmull Rom spline (see the Foley reference or the Appendix) fit to the corner points approximates the boundary.

### MOTION ESTIMATION(Block 36)

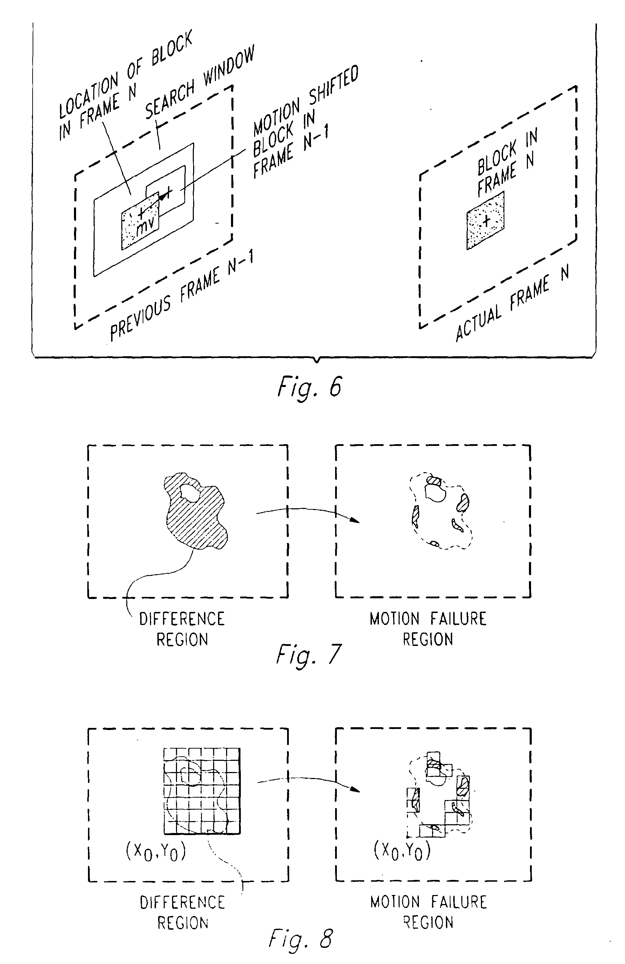

For each connected region and bit map derived from F_{N} in the preceding section, estimate the motion vector(s) of the region as follows. First, for each 16 by 16 macroblock in F_{N} which corresponds to a macroblock indicated by the bit map to be within the region, compare this macroblock with macroblocks in the previous reconstructed frame, F_{N-1}, which are translates of up to 15 pixels (the search area) of this macroblock in F_{N}. The comparison is the sum of the absolute differences in the pixel intensities of the selected macroblock in F_{N} and the compared macroblock in F_{N-1} with the sum over the 256 pixels of the macroblock. The search is performed at a sub-pixel resolution (half pixel with interpolation for comparison) to get a good match and extends 15 pixels in all directions. The motion vector corresponding to the translation of the selected macroblock of F_{N} to the F_{N-1} macroblock(s) with minimum sum differences can then be taken as an estimate of the motion of the selected macroblock. Note that use of the same macroblock locations as in the bit map eliminates the need to transmit an additional starting location. See Figure 6 indicating a motion vector.

If the minimum sum differences defining the motion vector is above a threshold, then none of the macroblocks searched in F_{N-1} sufficiently matches the selected macroblock in F_{N} and so do not use the motion vector representation. Rather, simply encode the selected macroblock as an I block (intraframe encoded in its entirety) and not as a P block (predicted as a translation of a block of the previous frame).

Next, for each macroblock having a motion vector, subdivide the macroblock into four 8 by 8 blocks in F_{N} and repeat the comparisons with translates of 8 by 8 blocks of F_{N-1} to find a motion vector for each 8 by 8 block. If the total number of code bits needed for the four motion vectors of the 8 by 8 blocks is less than the number of code bits for the motion vector of 16 by 16 macroblock and if the weighted error with the use of four motion vectors compared to the single macroblock motion vector, then use the 8 by 8 block motion vectors.

Average the motion vectors over all macroblocks in F_{N} which are within the region to find an average motion vector for the entire region. Then if none of the macroblock motion vectors differs from the average motion vector by more than a threshold, only the average motion need be transmitted (block 37). Also, the average motion vector can be used in error recovery as noted in the following Error Concealment section.

Thus for each connected region found in F_{N} by the foregoing segmentation section, transmit the motion vector(s) plus bit map (block 37). Typically, teleconferencing with 176 by 144 pixel frames will require 100-150 bits to encode the shapes of the expected 2 to 4 connected regions plus 200-300 bits for the motion vectors.

Also, the optional 8 by 8 or 16 by 16 motion vectors and overlapped motion compensation techniques may be used.

### MOTION FAILURE REGION DETECTION(Block 38)

An approximation to F_{N} can be synthesized from reconstructed F_{N-1} by use of the motion vectors plus corresponding (macro) blocks from F_{N-1} as found in the preceding section: for a pixel in the portion of F_{N} lying outside of the difference regions found in the Segmentation section, just use the value of the corresponding pixel in F_{N-1}, and for a pixel in a connected region, use the value of the corresponding pixel in the macroblock in F_{N-1} which the motion vector translates to the macroblock in F_{N} containing the pixel. The pixels in F_{N} with intensities which differ by more than a threshold from the intensity of the corresponding pixel in the approximation synthesized by use of the motion vectors plus corresponding (macro)blocks from F_{N-1} represent a motion compensation failure region. To handle this motion failure region, the intensity differences are thresholded, next median filtered, and subjected to the morphological close and open operations in the same manner as the differences from F_{N-1} to F_{N} described in the foregoing object detection and segmentation section. Note that the motion failure regions will lie inside of moving object regions; see Figure 7 as an illustration.

If a spline boundary contour was used, then only consider the portion of a macroblock inside the boundary contour.

### RESIDUAL SIGNAL ENCODING(Block 40)

Encode the motion failure regions as follows: tile these motion failure regions with the 16 by 16 macroblocks of the bit map of the foregoing boundary contour section, this eliminates the need to transmit a starting pixel for the tiling because it is the same as for the bit map. This also means that the tiling moves with the object and thus may lessen the changes.

For the motion failure regions, in each macroblock simply apply DCT with quantization of coefficients and runlength encoding and then Huffman encoding. See Figure 8 showing the macroblocks within the grid.

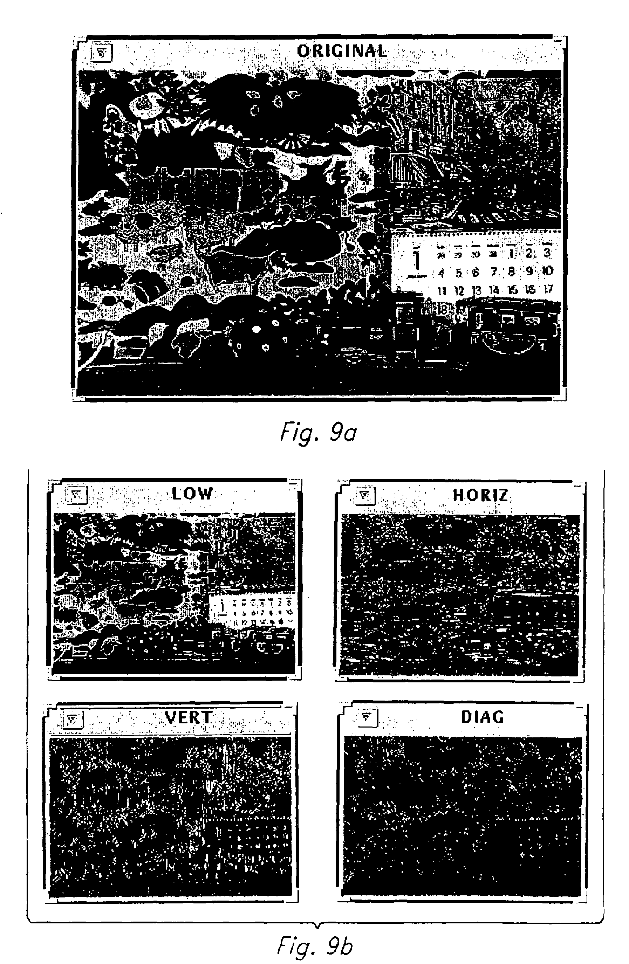

The motion failure region encoding uses wavelets instead of DCT or DPCM. In particular, the embodiment uses a wavelet transform on the macroblocks of the motion failure region as illustrated in Figure 8. Recall that a wavelet transform is traditionally a full frame transform based on translations and dilations of a mother wavelet, Y(), and a mother scaling function, F(); both Y() and F() are essentially non-zero for only a few adjacent pixels, depending upon the particular mother wavelet. Then basis functions for a wavelet transform in one dimension are the Y_{n,m}(t) = 2^{-m/2} Y(2^{-m}t - n) for integers n and m. Y() and F() are chosen to make the translations and dilations orthogonal analogous to the orthogonality of the sin(kt) and cos(kt) so a transform can be easily computed by integration (summation for the discrete case). The two dimensional transform simply uses basis functions as the products of Y_{n,m}()s in each dimension. Note that the index n denotes translations and the index m denotes dilations. Compression arises from quantization of the transformation coefficients analogous to compression with DCT. See for example, Antonini et al, Image Coding Using Wavelet Transform, 1 IEEE Tran. Image Proc. 205 (1992) and Mallat, A Theory for Multiresolution Signal Decomposition: The Wavelet Representation, 11 IEEE Tran. Patt. Anal. Mach. Intel. 674 (1989) for discussion of wavelet transformations. For discrete variables the wavelet transformation may also be viewed as subband filtering: the filter outputs are the reconstructions from sets of transform coefficients. Wavelet transformations proceed by successive stages of decomposition of an image through filterings into four subbands: lowpass horizontally with lowpass vertically, highpass horizontally with lowpass vertically, lowpass horizontally with highpass vertically, and highpass both horizontally and vertically. In the first stage the highpass filtering is convolution with the translates Y_{n,1} and the lowpass is convolution with the scaling function translates F_{n,1}. At the second stage the output of the first stage subband of lowpass in both horizontal and vertical is again filtered into four subbands but with highpass filtering now convolution with Y_{n,2} which in a sense has half the frequency of Y_{n,1}; similarly, the lowpass filtering is convolution with F_{n,2}. Figures 9a-b illustrate the four subband filterings with recognition that each filtered image can be subsampled by a factor of 2 in each direction, so the four output images have the same number of pixels as the original input image. The preferred embodiments may use biorthogonal wavelets which provides filters with linear phase. The biorthogonal wavelets are similar to the orthogonal wavelets described above but use two related mother wavelets and mother scaling functions (for the decomposition and reconstruction stages). See for example, Villasenor et al, Filter Evaluation and Selection in Wavelet Image Compression, IEEE Proceedings of Data Compression Conference, Snowbird, Utah (1994) which provides several examples of good biorthogonal wavelets. The preferred embodiment may use the (6,2) tap filter pair from the Villasenor paper which has low pass filter coefficients of: h₀ = 0.707107 h₁ = 0.707107 and g₀ = -0.088388 g₁ = 0.088388 g₂ = 0.707107 g₃ = 0.707107 g₄ = 0.088388 g₅ = -0.088388 for the analysis and synthesis filters.

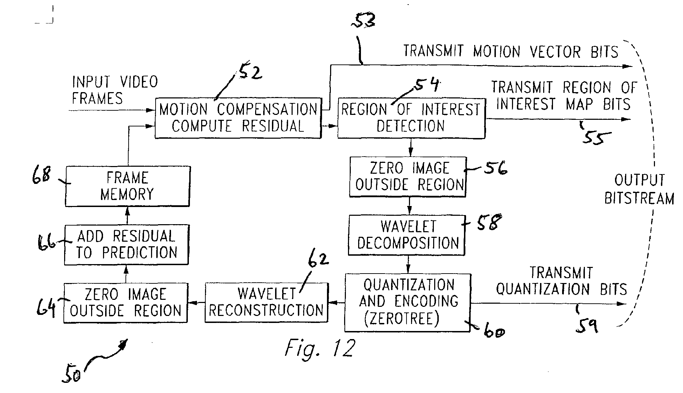

Preferred embodiment wavelet transforms generally selectively code information in only regions of interest in an image by coding only the regions in the subbands at each stage which correspond to the original regions of interest in the original image. See Figures 10a-c. heuristically illustrating how regions appear in the subband filtered outputs. This approach avoids spending bits outside of the regions of interest and improves video quality. The specific use for motion failure regions is a special case of only encoding regions of interest. Note that the thesis of H. J. Barnard ("Image and Video Coding Using a Wavelet Decomposition", Technische Universiteit Delft, 1994) segments an image into relatively homogeneous regions and then uses different wavelet transforms to code each region and only considered single images, not video sequences. Barnard's method also requires the wavelet transformation be modified for each region shape; this adds complexity to the filtering stage and the coding stage. The embodiment uses a single filtering transform. Further, the embodiment applies to regions of interest, not just homogeneous regions as in Barnard and which fill up the entire frame.

The embodiment represents regions of interest with an image map. The map represents which pixels in a given image lie within the regions of interest. The simplest form is a binary map representing to be coded or not to be coded. If more than two values are used in the map, then varying priorities can be given to different regions. This map must also be transmitted to the decoder as side information. For efficiency, the map information can be combined with other side information such as motion compensation.

The map is used during quantization. Since the wavelets decompose the image into subbands, the first step is to transfer the map to the subband structure (that is, determine which locations in the subband output images correspond to the original map). This produces a set of subregions in the subbands to be coded. Figures 10a-c show the subregions: Figure 10a shows the original image map with the regions of interest shown, and Figure 10b shows the four subband outputs with the corresponding regions of interest to be coded after one stage of decomposition. Figure 10c shows the subband structure after two stages and with the regions of interest.

The embodiment first sets the pixels outside of the regions of interest to 0 and then applies the wavelet decomposition (subband filtering stages). After decomposition and during the quantization of the wavelet transform coefficients, the encoder only sends information about values that lie within the subregions of interest to be coded. The quantization of coefficients provides compression analogous to DCT transform coefficient quantization. Experiments show that the video quality increases with compression using the regions of interest approach as compared to not using it.

There is some slight sacrifice made in representing the values near the edges of the selected regions of interest because the wavelet filtering process will smear the information somewhat and any information that smears outside the region of interest boundary is lost. This means that there is no guarantee of perfect reconstruction for values inside the region of interest even if the values in the regions of interest were perfectly coded. In practice, this does not seem to be a severe hardship because the level of quantization required for typical compression applications means that the images are far from any perfect reconstruction levels anyway and the small effect near the edges can be ignored for all practical purposes.

A preferred embodiment may use the zerotree quantization method for the transform coefficients. See Shapiro, Embedded Image Coding Using Zerotrees of Wavelet coefficients, 41 IEEE Trans. Sig. Proc. 3445 (1993) for details of the zerotree method applied to single images. The zerotree method implies that the only zerotrees that lie within the subregions of interest are coded. Of course, other quantization methods could be used instead of zerotree. Figure 11 illustrates the zerotree relations.

In applications the regions of interest can be selected in many ways, such as areas that contain large numbers of errors (such as quantizing video after motion compensation) or areas corresponding to perceptually important image features (such as faces) or objects for scalable compression. Having the ability to select regions is especially useful in motion compensated video coding where quantization of residual images typically contain information concentrated in areas of motion rather than uniformly spread over the frame.

Regions of interest can be selected as macroblocks which have errors that exceed a threshold after motion compensation. This application essentially combines region of interest map information with motion compensation information. Further, the regions of interest could be macroblocks covering objects and their motion failure regions as described in the foregoing.

Figure 12 illustrates a video compressor so using the wavelet transform on regions of interest.

An alternative preferred embodiment uses a wavelet transform on the motion failure region macroblocks and these may be aligned with the rectangular grid.
(1) Initially, encode the zeroth frame F₀ as an I picture. Compute the multi-level decomposition of the entire frame; quantize and encode the resulting wavelet coefficients, and transmit. The preferred embodiment uses the zerotree method of quantization and encoding. Any subsequent frame F_{N} that is to be an I picture can be encoded in the same manner.
(2) For each frame encoded as a P picture (not an I picture), perform motion compensation (block 52) on the input frame by comparing the pixel values in the frame with pixel values in the previous reconstructed frame. The resulting predicted frame is subtracted from the input frame to produce a residual image (different between predicted and actual pixel values). The motion compensation can be done using the segmentation approach described earlier or simply on a block by block basis (as in H.263). The resulting motion vector information is coded and transmitted (block 53).
(3) For each residual image computed in step (2), determine the region or regions of interest (block 54) that require additional information to be sent. This can be done using the motion failure approach described earlier or simply on a macroblock basis by comparing the sum of the squared residual values in a macroblock to a threshold and including only those macroblocks above the threshold in the region of interest. This step produces a region of interest map. This map is coded and transmitted (block 55). Because the map information is correlated with the motion vector information in (2), an alternative preferred embodiment codes and transmits the motion vector and map information together to reduce the number of bits required.
(4) Using the residual image computed in step (2) and the region of interest map produced in (3), values in the residual images that correspond to locations outside the region of interest map can be set to zero (block 56). This insures that values outside the region of interest will not affect values within the region of interest after wavelet decomposition. Step (4) is optional and may not be appropriate if the region based wavelet approach is applied to something besides motion compensated residuals.
(5) The traditional multi-level wavelet decomposition (block 58) is applied to the image computed in (4). The number of filtering operations can be reduced (at the cost of more complexity) by performing the filtering only within the regions of interest. However, because of the zeroing from (4), the same results will be obtained by performing the filtering on the entire image which simplifies the filtering stage.
(6) The decomposed image produced in (5) is next quantized and encoded (block 60). The region of interest map is used to specify which corresponding wavelet coefficients in the decomposed subbands are to be considered. Figure 10 shows how the region of interest map is used to indicate which subregions in the subbands are to be coded. Next, all coefficients within the subregions of interest are quantized and encoded (block 60). The preferred embodiment uses a modification of the zerotree approach by Shapiro, which combines correlation between subbands, scalar quantization and arithmetic coding. The zerotree approach is applied to those coefficients within the subregions of interest. Other quantization and coding approaches could also be used if modified to only code coefficients within the subregions of interest. The output bits of the quantization and encoding step is then transmitted (block 59). The resulting quantized decomposed image is used in step (7).
(7) The traditional multi-level wavelet reconstruction (block 62) is applied to the quantized decomposed image from (6). The number of filtering operations can be reduced (at the cost of more complexity) by performing the filtering only within the regions of interest. However, because of the zeroing from (4), the same results will be obtained by performing the filtering on the entire image which simplifies the filtering stage.
(8) As in (4), the reconstructed residual image computed in (7) and the region of interest map produced in (3) can be used to zero values in the reconstructed residual image that correspond to locations outside the region of interest map (block 64). This insures that values outside the region of interest will not be modified when the reconstructed residual is added to the predicted image. Step (8) is optional and may not be appropriate if the region based wavelet approach is applied to something besides motion compensated residuals.
(9) The resulting residual image from (8) is added to the predicted frame from (2) (block 66) to produce the reconstructed frame (this is what the decoder will decode). The reconstructed frame is stored in a frame memory (block 68) to be used to for motion compensation for the next frame.

More generally, subband filtering of other types such as QMF and Johnston could be used in place of the wavelet filtering provided that the region of interest based approach is maintained.

## Claims

1. A method of image transformations (58) of the type with first stage transformations of an image to yield first level subbands followed by second stage transformations of one of the first level subbands to yield second level subbands, the method comprising:
prior to the first stage transformations, setting (54, 56) pixels outside of a region of interest in the image, the region of interest being smaller than the region of the image, to a zero value (Fig.10a) so that the first level subbands (Fig.10b) and second level subbands (Fig.10c) relate to same regions of interest.

2. The method of claim 1, wherein the image is the residual from motion compensation in a sequence of video frames.

## Patentansprüche

1. Verfahren für die Bildtransformation (58) des Typs, der eine erste Stufe von Transformationen eines Bildes besitzt, um Unterbänder eines ersten Niveaus zu liefern, gefolgt von einer zweiten Stufe von Transformationen eines der Unterbänder des ersten Niveaus, um Unterbänder eines zweiten Niveaus zu liefern, wobei das Verfahren umfasst:
vor der ersten Stufe von Transformationen erfolgendes Setzen (54, 56) von Pixeln außerhalb eines interessierenden Bereichs in dem Bild, der kleiner als der Bereich des Bildes ist, auf den Wert null (Fig. 10a), so dass die Unterbänder des ersten Niveaus (Fig. 10b) und die Unterbänder des zweiten Niveaus (Fig. 10c) auf die gleichen interessierenden Bereiche bezogen sind.

2. Verfahren nach Anspruch 1, bei dem das Bild der aus einer Bewegungskompensation sich ergebende Rest in einer Folge von Videorahmen ist.

## Revendications

1. Procédé de transformation d'image (58) du type avec des transformations de premier stade d'une image pour produire des sous-bandes de premier niveau, suivies de transformations de deuxième stade de l'une des sous-bandes de premier niveau pour produire des sous-bandes de deuxième niveau, le procédé comprenant :
avant les transformations de premier stade, fixer (54, 56) les pixels en dehors d'une région d'intérêt dans l'image, la région d'intérêt étant plus petite que la région de l'image, à une valeur zéro (figure 10a) de telle sorte que les sous-bandes de premier niveau (figure 10b) et les sous-bandes de deuxième niveau (figure 10c) se rapportent aux mêmes régions d'intérêt.

2. Procédé selon la revendication 1, dans lequel l'image est l'image résiduelle provenant d'une compensation de mouvement dans une séquence de trames vidéo.
